(19) Europäisches Patentamt / European Patent Office / Office européen des brevets

(11) **EP 4 089 550 A1**

(12) **EUROPEAN PATENT APPLICATION**
published in accordance with Art. 153(4) EPC

(43) Date of publication:
**16.11.2022 Bulletin 2022/46**

(21) Application number: **21889356.8**

(22) Date of filing: **02.09.2021**

(51) International Patent Classification (IPC):
**G06F 16/951** (2019.01)  **G06F 16/907** (2019.01)
**G06F 16/38** (2019.01)  **G06F 16/33** (2019.01)
**G06F 3/0486** (2013.01)

(52) Cooperative Patent Classification (CPC):
**G06F 3/0486; G06F 16/33; G06F 16/38;
G06F 16/907; G06F 16/951**

(86) International application number:
**PCT/KR2021/011847**

(87) International publication number:
**WO 2022/097891 (12.05.2022 Gazette 2022/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.11.2020 KR 20200146767**

(71) Applicant: **Hashcraper Inc.**
**Seoul 03920 (KR)**

(72) Inventor: **KIM, Kyoung Ho**
**Gimpo-si Gyeonggi-do 10077 (KR)**

(74) Representative: **BCKIP Part mbB**
**Siegfriedstraße 8**
**80803 München (DE)**

(54) **METHOD FOR EXTRACTING SAME-STRUCTURED DATA, AND APPARATUS USING SAME**

(57)    The present invention provides a method for extracting same-structured data, the method comprising the steps of: obtaining, by a computing device, text information corresponding to an attribute value of an object corresponding to a search target; searching for each of a plurality of tags included in a body range, and identifying a specific tag included in a specific tag aggregate and corresponding to the text information; when the specific tag does not have a sibling tag in another tag aggregate, searching for a specific item tag which i) is included in the specific tag aggregate, ii) corresponds to an upper tag of the specific tag, and iii) has a sibling tag in the other tag aggregate; and obtaining a plurality of predetermined tag aggregates, which are included in the body range while including an item tag corresponding to a sibling tag of the specific item tag, as an uppermost tag, and displaying a plurality of predetermined objects corresponding thereto.

FIG. 2

## Description

### Technical Field

The present disclosure relates to a method of extracting data having the same structure, wherein assuming that in a state in which a plurality of objects and attribute values respectively included in the plurality of objects are displayed on a website, a plurality of tag aggregates respectively corresponding to the plurality of objects are expressed in a web language while being included in a body range to form the website, the method includes the steps performed by a computing device, the steps including: obtaining text information corresponding to an attribute value of an object corresponding to a search target; searching a plurality of tags included in a body range for a specific tag included in a specific tag aggregate and corresponding to the text information; if the specific tag does not have a sibling tag in another tag aggregate, searching for a specific item tag that i) is included in the specific tag aggregate, ii) corresponds to an upper tag of the specific tag, and iii) has a sibling tag in the other tag aggregate; and obtaining a plurality of predetermined tag aggregates, which are included in the body range while including an item tag corresponding to a sibling tag of the specific item tag, as an uppermost tag, and displaying a plurality of predetermined objects corresponding thereto.

### Background Art

Software for collecting web page information is called a crawler (spider or bot), and search engines such as Google, Naver, or the like use crawlers to collect and store websites around the world.

Software that collects information on the web, including crawlers, is diverse, and finding the same data on web pages is already widely used. Users want to collect target data faster and more accurately, and there is an increased demand for using item data obtained by extracting data on all items that are being sold in shopping malls, online bookstores, etc. using only a part of the acquired data (e.g., name, category, etc.).

Accordingly, the present inventor intends to propose a method of extracting data having the same structure and an apparatus using the same.

### Disclosure

### Technical Problem

An objective of the present disclosure is to solve all of the above problems.

Another objective of the present disclosure is to support users to obtain desired data by obtaining only a part of the data and then searching for the entire data thereof to obtain data of the same structure on the webs.

A still another objective of the present disclosure is to collect more accurate data by probabilistically determining whether the structure is the same.

### Technical Solution

In order to achieve the objectives of the present disclosure as described above and to realize the characteristic effects of the present disclosure to be described later, the characteristic configuration of the present disclosure is as follows.

In an aspect of the present disclosure, there is provided a method of extracting data having the same structure, wherein assuming that in a state in which a plurality of objects and attribute values included in each of the plurality of objects are displayed on a website, a plurality of tag aggregates corresponding to each of the plurality of objects are expressed in a web language while being included in a body range to form the website, the method includes the steps performed by a computing device, the steps including: obtaining text information corresponding to an attribute value of an object corresponding to a search target; searching a plurality of tags included in a body range for a specific tag included in a specific tag aggregate and corresponding to the text information; if the specific tag does not have a sibling tag in another tag aggregate, searching for a specific item tag that i) is included in the specific tag aggregate, ii) corresponds to an upper tag of the specific tag, and iii) has a sibling tag in the other tag aggregate; and obtaining a plurality of predetermined tag aggregates, which are included in the body range while including an item tag corresponding to a sibling tag of the specific item tag, as an uppermost tag, and displaying a plurality of predetermined objects corresponding thereto.

In an aspect of the present disclosure, there is provided an apparatus for extracting data having the same structure, wherein assuming that in a state in which a plurality of objects and attribute values included in each of the plurality of objects are displayed on a website, a plurality of tag aggregates corresponding to each of the plurality of objects are expressed in a web language while being included in a body range to form the website, the apparatus includes a computing device including: a communication unit configured to receive information from the website; and a processor configured to I) obtain text information corresponding to an attribute value of an object corresponding to a search target, II) to search a plurality of tags included in a body range for a specific tag included in a specific tag aggregate and corresponding to the text information, III) if the specific tag does not have a sibling tag in another tag aggregate, to search for a specific item tag that i) is included in the specific tag aggregate, ii) corresponds to an upper tag of the specific tag, and iii) has a sibling tag in the other tag aggregate, and IV) to obtain a plurality of predetermined tag aggregates, which are included in the body range while including an item tag corresponding to a sibling tag of the specific item tag, as an uppermost tag, and display a plurality of predetermined objects corresponding thereto.

## Advantageous Effects

According to the present disclosure, the following effects are obtained.

The present disclosure has the effect of supporting users to obtain desired data by obtaining only a part of data and then searching for the entire data thereof to obtain data having the same structure on the web.

In addition, the present disclosure has the effect of collecting more accurate data by probabilistically determining whether the structure is the same.

## Description of Drawings

FIG. 1 is a diagram illustrating a state in which data having the same structure is acquired according to an embodiment of the present disclosure.

FIG. 2 is a diagram illustrating a schematic configuration of a computing device according to an embodiment of the present disclosure.

FIG. 3 is a diagram illustrating a web language for expressing a web page according to an embodiment of the present disclosure.

FIG. 4 is a diagram illustrating a process of extracting data having the same structure according to an embodiment of the present disclosure.

FIG. 5 is a diagram illustrating a process of finding a specific tag according to an embodiment of the present disclosure.

FIG. 6 is a diagram illustrating a plurality of tag aggregates expressed as a web language according to an embodiment of the present disclosure.

FIG. 7 is a diagram illustrating a state in which an identity with each of a plurality of tag aggregates is shown probabilistically according to an embodiment of the present disclosure.

## Best Mode

A following detailed description of the present disclosure refers to the accompanying drawings, which show by way of illustration specific embodiments to which the present disclosure may be implemented. These embodiments will be described in sufficient detail to enable those skilled in the art to practice the present disclosure. It should be understood that although the various embodiments of the present disclosure are different from each other, they need not be mutually exclusive. For example, certain shapes, structures, and characteristics in one embodiment described herein may be changed in other embodiments without departing from the spirit and scope of the invention. In addition, it should be understood that the location or arrangement of individual components within respective disclosed embodiment may be changed without departing from the spirit and scope of the present disclosure. Accordingly, the detailed description set forth below is not intended to be taken in a limiting sense, and the scope of the present disclosure, if properly described, is limited only by the appended claims, along with all equivalents to those claims. Like reference numerals in the drawings refer to the same or similar functions throughout the various aspects.

Hereinafter, preferred embodiments of the present disclosure will be described in detail with reference to the accompanying drawings in order to enable those of ordinary skill in the art to easily practice the present disclosure.

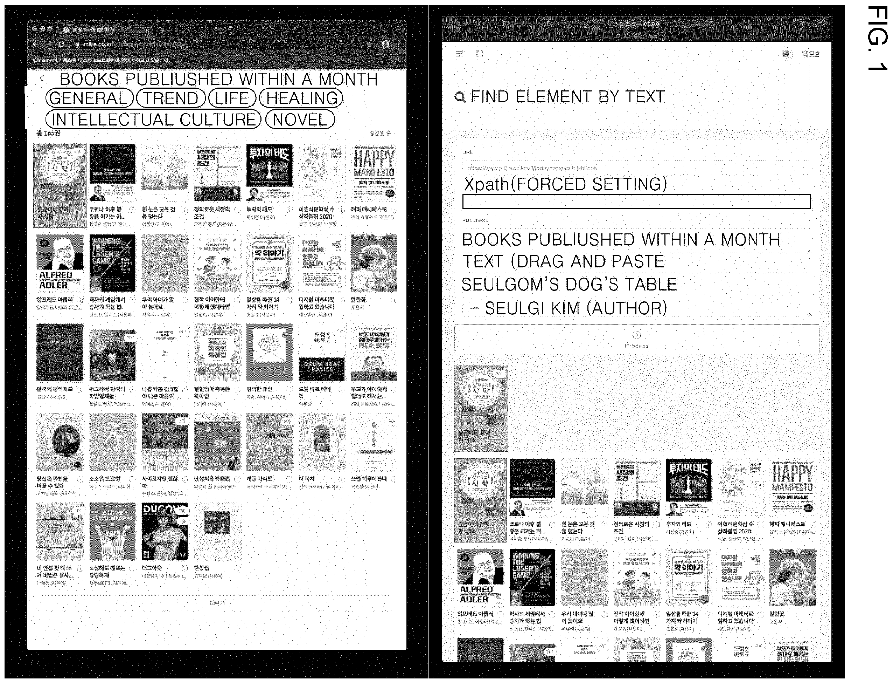

FIG. 1 is a diagram illustrating a state in which data having the same structure is acquired according to an embodiment of the present disclosure.

In the case of the left figure of FIG. 1, a web page of a site operated by an online bookstore is shown. According to the present disclosure, when a user wants to check the number and types of books displayed on a corresponding web page, the user only needs to input text such as the title or the like of a specific book.

Specifically, when the user selects a certain book (e.g., title: Seulgom's dog table) and inputs the title thereof, books having the same structure as the selected book may be extracted by the process of the present disclosure as illustrated in the right figure of FIG. 1 and may be displayed. Although books are illustrated in FIG. 1, various items such as shopping items, real estate listings, etc. may be used through the process of the present disclosure.

Hereinafter, the process according to the present disclosure will be described in detail.

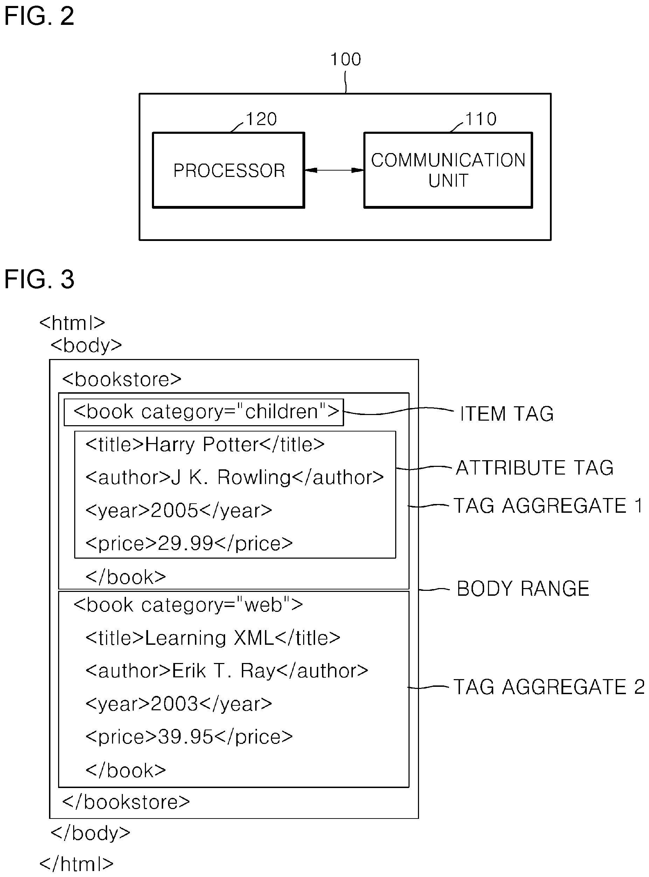

FIG. 2 is a diagram illustrating a schematic configuration of a computing device according to an embodiment of the present disclosure.

As illustrated in FIG. 2, the computing device 100 of the present disclosure may include a communication unit 110 and a processor 120. Although not illustrated in FIG. 1, a database may also be included in the computing device 100.

The computing device 100 may be a digital device that performs communication and includes a display function, and the present disclosure may adopt, as the computing device 100, any of other digital devices so long as it is equipped with a memory means such as a desktop computer, a notebook computer, a workstation, a PDA, a web pad, a mobile phone, etc., as well as a microprocessor having computational capability. Also, the computing device 100 may serve as a kind of server interworking with other terminals.

The communication unit 110 of the computing device 100 may be implemented using various communication technologies. That is, Wi-Fi, Wideband CDMA (WCDMA), High Speed Downlink Packet Access (HSDPA), High Speed Uplink Packet Access (HSUPA), High Speed Packet Access (HSPA), Mobile WiMAX (Mobile WiMAX), WiBro, Long Term Evolution (LTE), Bluetooth, infrared data association (IrDA), Near Field Communication (NFC), Zigbee, wireless LAN technology, etc. may be applied. In addition, when a service is provided by being connected to the Internet, TCP/IP, which is a standard protocol for information transmission on the Internet, may be adopted.

The database may store collected data therein and be accessed through the communication unit 110.

FIG. 3 is a diagram illustrating a web language for expressing a web page according to an embodiment of the present disclosure.

First, it may be set that a plurality of objects and attribute values included in each of the plurality of objects are displayed on the website. As illustrated in FIG. 1, a plurality of objects (e.g., books) may exist in any one of web pages, and attribute values (e.g., title, author, description, etc.) included in each object may exist.

Of course, unlike FIG. 1, in the present disclosure, the website may be a variety of websites, such as a shopping mall site, a real estate site, a restaurant site, etc.

Such a web site may be expressed by a web language, which may generally include Hypertext Markup Language (HTML). In some cases, other languages may be used.

FIG. 3 illustrates a web language used herein, which will now be described.

As illustrated in FIG. 1, there may be a plurality of objects (e.g., books, shopping items, etc.) on a single web page. The object may be a variety of objects, such as an image, text, video, or a combination thereof. In this case, each of the plurality of objects may correspond to a plurality of tag aggregates, and attribute values of the object being displayed may correspond to various tags in a tag aggregate.

Referring to FIG. 3, a plurality of tag aggregates may be included within a body range (a sub-tag of a body tag). In this case, each of the tag aggregates may represent an object displayed on a web page.

Each of the tag aggregates may include an item tag and attribute tags. The item tag may correspond to a parent tag of the attribute tags, and may correspond to a sibling tag with an item tag of another tag aggregate. A book tag (category = "children") of a tag aggregate 1 and a book tag (category = "web") of a tag aggregate 2 in FIG. 3 may correspond to sibling tags.

Attribute tags such as a title tag, an author tag, a year tag, a price tag, and attribute values thereof (e.g., Harry Potter, J K. Rowling, 2005, 29.99, etc.) are included in an item tag of a tag aggregate 1, wherein the attribute tags will not have a sibling relationship with those of a tag aggregate 2, since both upper tags (parent tags) are different from each other.

For reference, although FIG. 3 illustrates that only one level attribute tag is included in each of the tag aggregates, in some cases, other sub-level attribute tags, sub-level attribute tags, etc. may be provided while maintaining a parent relationship therebetween.

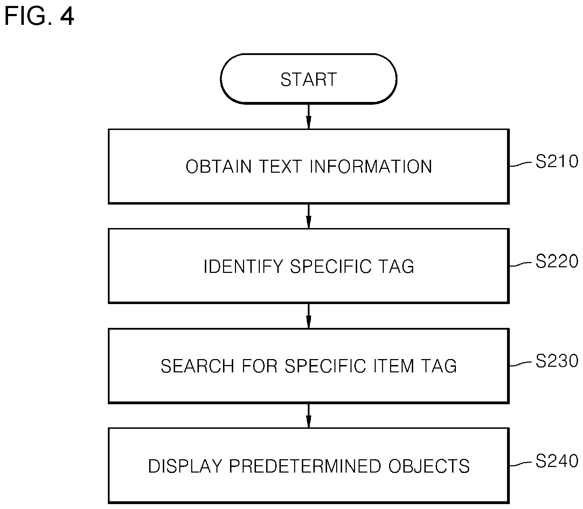

FIG. 4 is a diagram illustrating a process until data having the same structure is extracted according to an embodiment of the present disclosure.

First, the processor 120 of the computing device 100 may obtain an address of a website for which objects having the same structure are collected.

Also, the processor 120 of the computing device 100 may obtain text information corresponding to an attribute value of an object corresponding to a search target (S210).

As illustrated in FIG. 1, according to an embodiment of the present disclosure, an object corresponds to a book, and an attribute value for the object may correspond to a title, an author, a publication date, etc. of the book.

The processor 120 may receive text information corresponding to the attribute value of the object from a user, or obtain text dragged by the user as the text information. That is, the user may directly input the title of the book 'Seulgom's Dog Table' or drag the title of the book 'Seulgom's Dog Table' on the web page, so that the computing device 100 of the present disclosure can detect this.

The text information (e.g., the title of the book) acquired by the processor 120 corresponds to a search target, and all tags (various item tags, various attribute tags, etc.) in the body range (a body tag and a sub-tag thereof) may be target tags for search.

Next, the processor 120 may search a plurality of tags included in the body range for a specific tag included in a specific tag aggregate and corresponding to the text information (S220).

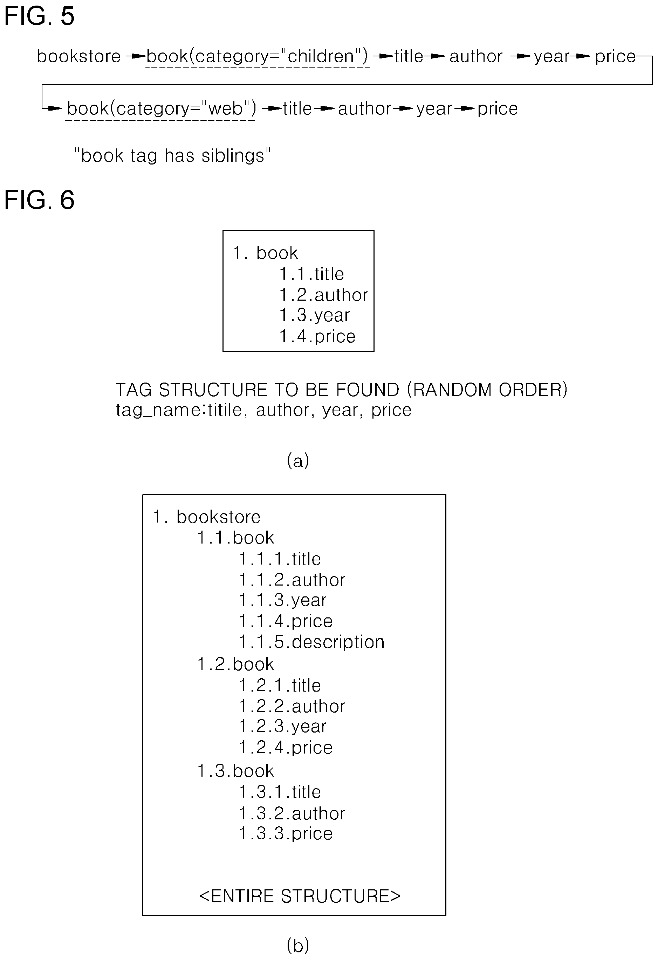

FIG. 5 is a diagram illustrating a process of finding a specific tag according to an embodiment of the present disclosure. Hereinafter, a process of finding a specific tag (corresponding to text information) will be described with reference to FIG. 5.

As described above, each of the plurality of tag aggregates may include an item tag and attribute tags thereof, which may correspond to sub-tags (child tags) of the item tag, and the item tags of the plurality of tag aggregates may be in a sibling tag relationship.

For convenience of description, as illustrated in FIG. 3, it is assumed that a first tag aggregate and a second tag aggregate are included in a body range (a body tag and sub-tags thereof), wherein the first tag aggregate includes a first item tag and sub-tags consisting of a 1-1 attribute tag and a 1-2 attribute tag, and the second tag aggregate includes a second item tag and sub-tags consisting of a 2-1 attribute tag and a 2-2 attribute tag.

In this case, the processor 120 may check the first item tag, the 1-1 attribute tag, the 1-2 attribute tag, the second item tag, the 2-1 attribute tag, and the 2-2 attribute tag in this order as a specific tag (search result tag) corresponding to the text information.

That is, the processor 120 may attempt a search for the specific tag by gradually entering into a child tag from the highest-level tag under the body tag on the web language. If all child tags of one item tag have been searched, then, sibling tags of the item tag may be searched equally.

In this regard, referring to FIG. 5, the processor 120 may sequentially perform a retrieval operation on a bookstore tag, which is the highest-level tag under the body tag, a book tag (category = "children") and attribute tags thereof (title, author, year, price), which correspond to a tag aggregate 1, and a book tag (category = "web") and attribute tags thereof (title, author, year, price), which correspond to a tag aggregate 2.

When the received text information is divided into two text groups, the processor 120 may compare all sub-tags under a body tag for the two text groups according to an embodiment of the present disclosure.

For convenience of description, it may be assumed that the text information includes at least a first group and a second group. For example, if the text information received by the processor 120 is 'Harry Potter', 'Harry' may be set as the first group, and 'Potter' may be set as the second group.

The processor 120 of the computing device 100 may determine the matching between each of the first group of text ('Harry') and the second group of text ('Potter') and all tags under the body by comparing each of the first group of text ('Harry') and the second group of text ('Potter') sequentially with the text ('Harry Potter JK. Rowling 2005 29.29 Learning XML Erik T. Ray 2003 39.95') of the highest-level tag (bookstore), the text ('Harry Potter J K. Rowling 2005 29.29') of the first item tag (book [1]), the text ('Harry Potter') of the 1-1 attribute tag (title), the text ('J K. Rowling') of the 1-2 attribute tag (author), the text ('2005') of the 1-3 attribute tag (year), and the text ('29.29') of the 1-4 attribute tag (price) in the order.

In addition, after the determination, the processor 120 may determine the matching between each of the first group of text ('Harry') and the second group of text ('Potter') and all tags under the body by comparing each of the first group of text ('Harry') and the second group of text ('Potter') sequentially with the text ('Learning XML Erik T. Ray 2003 39.95') of the second item tag (book [2]), the text ('Learning XML') of the 2-1 attribute tag (title), the text ('Erik T. Ray') of the 2-2 attribute tag (author), the text ('2003') of the 2-3 attribute tag (year), and the text ('39.95') of the 2-4 attribute tag (price) in the order.

As a result of the search as described above, it can be seen that the text information ('Harry Potter') is included in the text ('Harry Potter JK. Rowling 2005 29.29 Learning XML Erik T. Ray 2003 39.95') of the highest-level tag (bookstore), the text ('Harry Potter J K. Rowling 2005 29.29') of the first item tag (book [1]), and the text ('Harry Potter') of the 1-1 attribute tag (title).

In this case, the processor 120 may give priority to the lowest tag and display the search result. This is to find a tag containing the most accurately matching data, with the result that the specific tag (search result tag) to be found that matches with the input text information ('Harry Potter') may be the 1-1 attribute tag (title).

That is, when the text information is included in both the text of the predetermined item tag and the text of the predetermined attribute tag, which are included in the same tag aggregate, the processor 120 may determine the predetermined attribute tag corresponding to the sub-tag as the specific tag. It may be natural that although not included in the same tag aggregate, the lowest tag may be identified as the specific tag (search result tag) desired to be found according to the present disclosure.

The processor 120 may retrieve all the tags from a tag of a higher level to a tag of a lower level. At this time, assuming that the number of arrays in which the texts of the target search tags (book [1], title, etc.) are separated is n1 and the number of arrays in which the input text information ('Harry Potter') is separated is n2, the processor 120 may perform the matching operation with a counting number of $n1 \times n2$ in the retrieval process.

For example, when comparing the input text information in the first item tag (book [1]), the text of the first item tag has a total of 7 divided arrays (Harry, Potter, J, K., Rowling, 2005, 29.29), so n1 may be 7. Also, since the input text information is divided into a total of two arrays such as Harry and Potter, n2 may be 2. Accordingly, the number of matching counts in the first item tag (book [1]) may be 14.

Also, when comparing the input text information in the 1-1 attribute tag (title), the text of the 1-1 attribute tag is divided into a total of two arrays, such as Harry and Potter, so n1 may be 2. Accordingly, the number of matching counts in the 1-1 attribute tag (title) may be 4.

Aa such, the processor 120 may determine a specific tag corresponding to the input text information by comparing the input text information with all tags under the body tag to find the matching state therebetween, and determining the lower tag of the matched tags as the specific tag (search result tag) corresponding to the input text information.

On the other hand, in some cases, the processor 120 may preferentially perform a search in a single array group of the input text information ('Harry Potter'), which is a search target, without dividing the input text information into two array groups. That is, in the process of finding a specific tag, the processor 120 may perform a search for the single array group, 'Harry Potter', with high weight, and for two array groups, 'Harry' and 'Potter', with low weight.

This is because for example, when 'Harry' and 'Potter' are separately searched, any one of tags containing 'Potter Harry' may also be searched. Accordingly, the processor 120 may search for 'Harry Potter', which is a single array group, with high weight compared to 'Harry' and 'Potter', which are divided array groups.

Next, the processor 120 of the computing device 100 may perform a process of extracting data having the same structure as the input text information on the basis of the searched specific tag.

If a specific tag does not have a sibling tag in another tag aggregate, the processor 120 may search for a specific item tag which i) is included in a specific tag aggregate, ii) corresponds to a parent tag of the specific tag, and iii) has a sibling tag in the other tag aggregate (S230).

For example, when the received text information is 'Harry Potter', the processor 120 has determined the 1-1 attribute tag (title) as a search result tag. However, since the 1-1 attribute tag does not have a sibling tag in another tag aggregate (e.g., tag aggregate 2), another tag is required to extract data having the same structure as the object corresponding to the received text information.

The processor 120 may determine the first item tag (book [1]) which is included in tag aggregate 1 (specific tag aggregate), corresponds to a higher-level tag of the 1-1 attribute tag (specific tag), and has a sibling tag in another tag aggregate (e.g., tag aggregate 2), as a specific item tag.

As described above, the search for an item tag having a sibling tag in another tag aggregate is to find other data having the same structure as well as data corresponding to the input text information.

As a result, the processor 120 may search for a tag having a sibling tag in another tag aggregate while retrieving higher-level tags of a checked specific tag (search result tag) on the basis of the input text information.

Next, the processor 120 of the computing device 100 may obtain a plurality of predetermined tag aggregates included in the body range while including an item tag corresponding to a sibling tag with a specific item tag as a highest-level tag, and display a plurality of predetermined objects corresponding thereto (S240).

That is, the processor 120 may obtain a plurality of predetermined tag aggregates (e.g., tag aggregate 2) included in the body range (a book tag and sub-tags thereof) while including an item tag (e.g., second item tag, etc.) corresponding to a sibling tag with the first item tag (book [1]) as a highest-level tag, and display a predetermined object (e.g., Learning XML book) corresponding thereto.

The predetermined object may be a plurality of objects, and the processor 120 according to the present disclosure may display all of the corresponding predetermined objects (e.g., other books, etc.).

The same structure associated with the data extracted according to the present disclosure will be described with reference to FIG. 6.

FIG. 6 is a diagram illustrating a plurality of tag aggregates expressed as a web language according to an embodiment of the present disclosure.

The tag aggregate of FIG. 6A may be set as data (specific tag aggregate) corresponding to the input text information, and in the plurality of tag aggregates of FIG. 6B, data having the same structure as the specific tag aggregate can be retrieved.

In the present disclosure, the data having the same structure may mean the matched data when comparing the tag names of all sub-tags as listed. Referring to FIG. 6, the sub-tags (attribute tags) of the specific tag aggregate of FIG. 6A include title, author, year, price, etc., and the second tag aggregate (1.2 book) of the plurality of tag aggregates of FIG. 6B can be confirmed as the matched data.

However, since it may be inefficient to check all sub-tags one by one to determine whether they match or not, in the present disclosure, a plurality of predetermined tag aggregates including an item tag corresponding to a sibling tag with a specific item tag may all be extracted and determined as data having the same structure. Also, a plurality of predetermined objects corresponding to a plurality of predetermined tag aggregates may be displayed as data having the same structure.

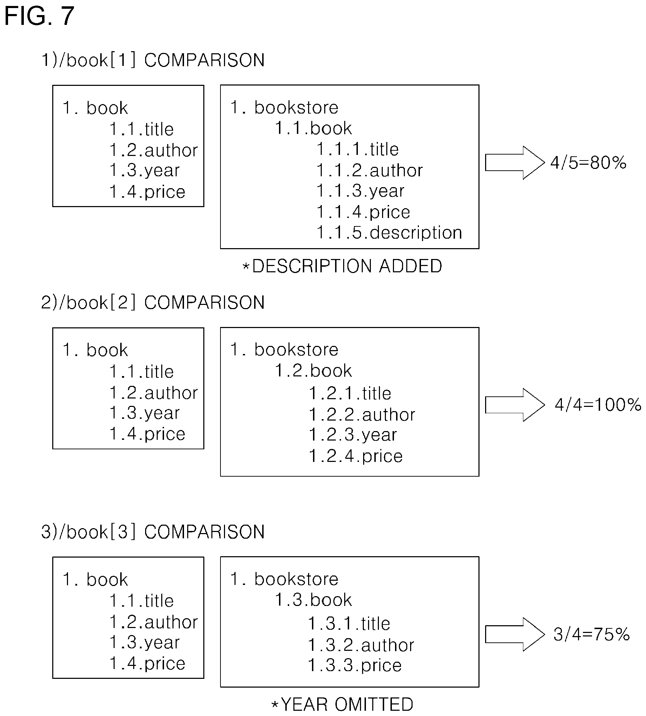

However, this needs verification, which may be probabilistically performed by the processor 120 of the present disclosure. This will be discussed with reference to FIG. 7 below.

FIG. 7 is a diagram illustrating a state in which an identity with each of a plurality of tag aggregates is shown probabilistically according to an embodiment of the present disclosure.

Each of the plurality of predetermined tag aggregates may include at least one attribute tag. That is, a predetermined tag aggregate having book [1] as an item tag may include sub-tags for title, author, etc. as predetermined tags, and a predetermined tag aggregate having book [2] as an item tag may include sub-tags for year, price, etc. as predetermined tags.

In this case, the processor 120 may extract a preset number of comparison tag aggregates from a plurality of predetermined tag aggregates included in the body range. That is, since it is not possible to determine the identity of all of the plurality of predetermined tag aggregates (e.g., corresponding to objects displayed on a web page) included in the body range, only a preset number (e.g., 10, etc.) of comparison tag aggregates may be first extracted.

The predetermined tag aggregate is a tag aggregate that has a sibling relationship with a specific tag aggregate corresponding to the input text information as described above, and may refer to all tag aggregates included in the body range.

Next, the processor 120 may compare the attribute tags included in the specific tag aggregate (the tag aggregate including the search result tag) with each of the attribute tags included in the preset number of comparison tag aggregates, and when an identity-comparison result is greater than or equal to a preset probability, display the plurality of predetermined objects corresponding to the plurality of predetermined tag aggregates as an element having the same structure.

That is, the processor 120 may compare the attribute tags included in the specific tag aggregate with each of the attribute tags included in the preset number of comparison tag aggregates, and when a comparison result is greater than or equal to a preset probability, finally display the plurality of predetermined objects (e.g., book, shopping item, etc.) as an element having the same structure.

In FIG. 7, there are a preset number of comparison tag aggregates each including at least one attribute tag. Specifically, the left tag aggregate may correspond to a specific tag aggregate, and each of the right tag aggregates (e.g., book [1], book [2], book [3]) may be a preset number of comparison tag aggregates extracted from a plurality of predetermined tag aggregates.

As can be seen from FIG. 7, the book [1] tag aggregate includes attribute tags for title, author, year, price, and description, and the book [2] tag aggregate includes attribute tags for title, author, year, and price, and the book [3] tag aggregate includes attribute tags for title, author, and price.

In this case, it may be assumed that if the number of attribute tags included in the specific tag aggregate is greater than or equal to the number of attribute tags included in the comparison tag aggregate, the number of attribute tags included in the specific tag aggregate is set to p, and the number of attribute tags included in the comparison tag aggregate is set to q, whereas if the number of attribute tags included in the specific tag aggregate is less than the number of attribute tags included in the comparison tag aggregate, the number of attribute tags included in the specific tag aggregate is set to q, and the number of attribute tags included in the comparison tag aggregate is set to p.

The processor 120 may calculate the comparison value by calculating the following equation for each of the preset number of comparison tag aggregates.

$$\text{(Equation)} \quad q/p = \text{comparison value}$$

That is, the Equation may calculate a comparison value by dividing the smaller number (q) by the greater number (p) between the number of attribute tags included in the specific tag aggregate and the number of attribute tags included in the comparison tag aggregate.

Also, the processor 120 may determine whether an average value obtained based on the comparison value of each of a preset number of comparison tag aggregates is equal to or greater than a preset probability.

Referring to FIG. 7, it can be seen that there are three comparison tag aggregates as book [1, 2, 3], each of which is compared with a specific tag aggregate (the number of attribute tags is four).

Since the comparison tag aggregate (book [1]) contains 5 attribute tags, the comparison value calculated by the Equation is 4/5=80%; since the comparison tag aggregate (book [2]) contains 4 attribute tags, the comparison value calculated by the Equation is 4/4=100%; and since the comparison tag aggregate (book [3]) contains 3 attribute tags, the comparison value calculated by the Equation is 3/4=75%.

The processor 120 may calculate an average value of the comparison values, and as illustrated in FIG. 7, an average value of 85% of comparison values of 80, 100, and 75 may be obtained. Assuming that the preset probability value is set to 80, since the average value of 85% is greater than or equal to the preset probability value, the processor 120 may display a plurality of predetermined objects corresponding to a plurality of predetermined tag aggregates as the same structured element.

That is, since the identity of some comparison tag aggregates is satisfied, the identity of the entire tag aggregates is also considered to be satisfied, so the plurality of predetermined objects may be displayed as the same structured element.

When the average value of the comparison values is lower than a preset probability value (e.g., 80%), the processor 120 determines the corresponding predetermined objects as not corresponding to the same structured element and a message indicating that the same structure does not exist may be displayed.

As described above, the determination of the same structure as a probability value using the matched state and number of attribute tags may be applied only when the number of attribute tags under the tag aggregate is equal to or greater than a predetermined value. When the number of attribute tags of a specific tag aggregate is less than a certain number (e.g., 2), the process using the above Equation (q/p = comparison value) and the average value will not be applied.

In addition, although in the above Equation, a method (q/p) of simply dividing the number of attribute tags of a specific tag aggregate and the number of attribute tags included in the comparison tag aggregate was considered, when the number of the attribute tags of a tag aggregate is greater than or equal to a certain number (e.g., 30), a modified Equation in which some values are adjusted may be used for more accurate comparison.

Specifically, a method of dividing a value obtained by subtracting a predetermined number from the number of attribute tags of a specific tag aggregate and a value obtained by subtracting the predetermined number from the number of attribute tags included in the comparison tag aggregate may be used. In this case, the Equation will be (q-K/p-K = comparison value). The predetermined numerical value, K, may be a kind of constant that changes according to the number of attribute tags that are included. For example, as the number of attribute tags increases, the K value may also increase.

Meanwhile, in addition to the process of extracting an object of the same structure from any one web page, it is also possible to extract an object of the same structure from a web site to which the plurality of the web pages are connected. This is because, after performing the process of the present disclosure in one web page, only page processing is performed to move to the next web page.

That is, the process of the present disclosure may be performed even on a web site including a plurality of web pages, and data (element) of the same structure extracted from each web page may be displayed, respectively, or the whole data (elements) may be displayed at once. Accordingly, the processor 120 allows the user to input only the address of a specific web site to check the displayed data of the same structure.

The embodiments according to the present disclosure described above may be implemented in the form of program instructions that can be executed through various computer components and recorded on a computer-readable recording medium. The computer-readable recording medium may include program instructions, data files, data structures, etc. alone or in combination. The program instructions recorded on the computer-readable recording medium may be specially designed and configured for the present disclosure, or may be known and available to those skilled in the computer software field. Examples of the computer-readable recording medium include a magnetic medium such as a hard disk, a floppy disk, and a magnetic tape, an optical recording medium such as a CD-ROM, and a DVD, a magneto-optical medium such as a floppy disk, and hardware devices such as ROM, RAM, flash memory, and the like, specially configured to store and execute program instructions. Examples of program instructions include not only machine language codes such as those generated by a compiler, but also advanced language codes that can be executed by a computer using an interpreter or the like. The hardware device may be configured to operate as one or more software modules for carrying out the processing according to the present disclosure, and vice versa.

While the present disclosure has been described with respect to specific matters such as specific components, limited embodiments, and drawings as described in the foregoing, these are only provided to help a more general understanding of the present disclosure, the present disclosure is not limited to the above embodiments, and those of ordinary skill in the art to which the present disclosure pertains can devise various modifications and variations from these descriptions.

Therefore, the spirit of the present disclosure should not be limited to the above-described embodiments, and not only the claims described below, but also all modifications equivalently to the claims described below will fall within the spirit and scope of the present disclosure.

**Claims**

1. A method of extracting data having the same structure, wherein assuming that in a state in which a plurality of objects and attribute values included in each of the plurality of objects are displayed on a website, a plurality of tag aggregates corresponding to each of the plurality of objects are expressed in a web language while being included in a body range to form the website, the method comprises the steps performed by a computing device, the steps comprising:

(a) obtaining text information corresponding to an attribute value of an object corresponding to a search target;
(b) searching a plurality of tags included in a body range for a specific tag included in a specific tag aggregate and corresponding to the text information;
(c) if the specific tag does not have a sibling tag in another tag aggregate, searching for a specific item tag that i) is included in the specific tag aggregate, ii) corresponds to an upper tag of the specific tag, and iii) has a sibling tag in the other tag aggregate; and
(d) obtaining a plurality of predetermined tag aggregates, which are included in the body range while including an item tag corresponding to a sibling tag of the specific item tag, as an uppermost tag, and displaying a plurality of predetermined objects corresponding thereto.

2. The method of claim 1, wherein in step (b), in a state in which each of the plurality of tag aggregates includes an item tag and attribute tags thereof, which correspond to sub-tags of the item tag, and the item tags of the plurality of tag aggregates are in a sibling tag relationship with each other, assuming that a first tag aggregate and a second tag aggregate are included in the body range, wherein the first tag aggregate includes a first item tag and sub-tags consisting of a 1-1 attribute tag and a 1-2 attribute tag, and the second tag aggregate includes a second item tag and sub-tags consisting of a 2-1 attribute tag and a 2-2 attribute tag,
the computing device checks the first item tag, the 1-1 attribute tag, the 1-2 attribute tag, the second item tag, the 2-1 attribute tag, and the 2-2 attribute tag in this order as the specific tag corresponding to the text information.

3. The method of claim 2, wherein assuming that the text information includes at least a first group and a second group, the computing device determines the matched state of each of the first group of text and the second group of text by comparing each of the first group of text and the second group of text sequentially with the text of the first item tag, the text of the 1-1 attribute tag, the text of the 1-2 attribute tag, the text of the second item tag, the text of the 2-1 attribute tag, and the text of the 2-2 attribute tag in the order.

4. The method of claim 2, wherein when the text information is included in both the text of the predetermined item tag and the text of the predetermined attribute tag, which are included in the same tag aggregate, the computing device determines the predetermined attribute tag corresponding to the sub-tag as the specific tag.

5. The method of claim 1, wherein the step (d) comprises the sub-steps performed by the computing device and comprising:

(d1) extracting a preset number of comparison tag aggregates from the plurality of predetermined tag aggregates included in the body range; and
(d2) comparing the attribute tags included in the specific tag aggregate with each of the attribute tags included in the preset number of comparison tag aggregates, and when an identity-comparison result is greater than or equal to a preset probability, displaying the plurality of predetermined objects corresponding to the plurality of predetermined tag aggregates as an element having the same structure.

6. The method of claim 5, wherein in the sub-step (d2), in a state in which each of the preset number of comparison tag aggregates includes at least one attribute tag,

(I-1) assuming that if the number of attribute tags included in the specific tag aggregate is greater than or equal to the number of attribute tags included in the comparison tag aggregate, the number of attribute tags included in the specific tag aggregate is set to p, and the number of attribute tags included in the comparison tag aggregate is set to q, whereas (1-2) if the number of attribute tags included in the specific tag aggregate is less than the number of attribute tags included in the comparison tag aggregate, the number of attribute tags included in the specific tag aggregate is set to q, and the number of attribute tags included in the comparison tag aggregate is set to p,
the computing device (II-1) calculates the comparison value by calculating Equation ($q/p$ = comparison value) for each of the preset number of comparison tag aggregates, and (11-2) determines whether an average value obtained based on the comparison value of each of a preset number of comparison tag aggregates is equal to or greater than a preset probability.

7. The method of claim 1, wherein in step (a), the text information is obtainable through dragging or a user's input.

8. An apparatus for extracting data having the same structure, wherein assuming that in a state in which a plurality of objects and attribute values included in each of the plurality of objects are displayed on a website, a plurality of tag aggregates corresponding to each of the plurality of objects are expressed in a web language while being included in a body range to form the website, the apparatus comprises a computing device comprising:

a communication unit configured to receive information from the website; and
a processor configured to I) obtain text information corresponding to an attribute value of an object corresponding to a search target, II) to search a plurality of tags included in a body range for a specific tag included in a specific tag aggregate and corresponding to the text information, III) if the specific tag does not have a sibling tag in another tag aggregate, to search for a specific item tag that i) is included in the specific tag aggregate, ii) corresponds to an upper tag of the specific tag, and iii) has a sibling tag in the other tag aggregate, and IV) to obtain a plurality of predetermined tag aggregates, which are included in the body range while including an item tag corresponding to a sibling tag of the specific item tag, as an uppermost tag, and display a plurality of predetermined objects corresponding thereto.

## FIG. 1

EP 4 089 550 A1

## FIG. 2

100

120 PROCESSOR ⟷ 110 COMMUNICATION UNIT

## FIG. 3

```
<html>
  <body>
    <bookstore>
      <book category="children">          — ITEM TAG
        <title>Harry Potter</title>
        <author>J K. Rowling</author>      — ATTRIBUTE TAG
        <year>2005</year>                  — TAG AGGREGATE 1
        <price>29.99</price>
      </book>
                                           — BODY RANGE
      <book category="web">
        <title>Learning XML</title>
        <author>Erik T. Ray</author>
        <year>2003</year>                  — TAG AGGREGATE 2
        <price>39.95</price>
      </book>
    </bookstore>
  </body>
</html>
```

12

# FIG. 4

```
         ┌──────────────┐
         │    START     │
         └──────┬───────┘
                │
                ▼
┌───────────────────────────────────┐
│     OBTAIN TEXT INFORMATION        │──── S210
└───────────────┬───────────────────┘
                │
                ▼
┌───────────────────────────────────┐
│       IDENTIFY SPECIFIC TAG        │──── S220
└───────────────┬───────────────────┘
                │
                ▼
┌───────────────────────────────────┐
│     SEARCH FOR SPECIFIC ITEM TAG   │──── S230
└───────────────┬───────────────────┘
                │
                ▼
┌───────────────────────────────────┐
│    DISPLAY PREDETERMINED OBJECTS   │──── S240
└───────────────────────────────────┘
```

# FIG. 5

bookstore → book(category="children") → title → author → year → price
└→ book(category="web") → title → author → year → price

"book tag has siblings"

# FIG. 6

```
1. book
      1.1.title
      1.2.author
      1.3.year
      1.4.price
```

TAG STRUCTURE TO BE FOUND (RANDOM ORDER)
tag_name:titile, author, year, price

(a)

```
1. bookstore
      1.1.book
            1.1.1.title
            1.1.2.author
            1.1.3.year
            1.1.4.price
            1.1.5.description
      1.2.book
            1.2.1.title
            1.2.2.author
            1.2.3.year
            1.2.4.price
      1.3.book
            1.3.1.title
            1.3.2.author
            1.3.3.price


      <ENTIRE STRUCTURE>
```

(b)

# FIG. 7

1)/book[1] COMPARISON

```
1. book
    1.1.title
    1.2.author
    1.3.year
    1.4.price
```

```
1. bookstore
    1.1.book
        1.1.1.title
        1.1.2.author
        1.1.3.year
        1.1.4.price
        1.1.5.description
```

⟹ 4/5=80%

*DESCRIPTION ADDED

2)/book[2] COMPARISON

```
1. book
    1.1.title
    1.2.author
    1.3.year
    1.4.price
```

```
1. bookstore
    1.2.book
        1.2.1.title
        1.2.2.author
        1.2.3.year
        1.2.4.price
```

⟹ 4/4=100%

3)/book[3] COMPARISON

```
1. book
    1.1.title
    1.2.author
    1.3.year
    1.4.price
```

```
1. bookstore
    1.3.book
        1.3.1.title
        1.3.2.author
        1.3.3.price
```

⟹ 3/4=75%

*YEAR OMITTED

| INTERNATIONAL SEARCH REPORT | International application No. |
|---|---|
| | **PCT/KR2021/011847** |

**A. CLASSIFICATION OF SUBJECT MATTER**

**G06F 16/951**(2019.01)i; **G06F 16/907**(2019.01)i; **G06F 16/38**(2019.01)i; **G06F 16/33**(2019.01)i; **G06F 3/0486**(2013.01)i

According to International Patent Classification (IPC) or to both national classification and IPC

**B. FIELDS SEARCHED**

Minimum documentation searched (classification system followed by classification symbols)

G06F 16/951(2019.01); G06F 16/33(2019.01); G06F 17/00(2006.01); G06F 17/21(2006.01); G06F 17/30(2006.01); G06Q 50/10(2012.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 데이터 (data), 태그 (tag), 객체 (object), 검색 (search), 디스플레이 (display)

**C. DOCUMENTS CONSIDERED TO BE RELEVANT**

| Category* | Citation of document, with indication, where appropriate, of the relevant passages | Relevant to claim No. |
|---|---|---|
| A | CN 104965849 A (HARBIN ENGINEERING UNIVERSITY) 07 October 2015 (2015-10-07)<br>See claim 1. | 1-8 |
| A | KR 10-2008-0031928 A (WINK TECHNOLOGIES, INC.) 11 April 2008 (2008-04-11)<br>See claims 1-10. | 1-8 |
| A | US 2010-0107055 A1 (ORELIND, Greger J. et al.) 29 April 2010 (2010-04-29)<br>See paragraphs [0015]-[0038]. | 1-8 |
| A | KR 10-2013-0059866 A (BYUN, Kyu Hong et al.) 07 June 2013 (2013-06-07)<br>See paragraphs [0016]-[0061]. | 1-8 |
| A | KR 10-2014-0100869 A (SAMSUNG ELECTRONICS CO., LTD.) 18 August 2014 (2014-08-18)<br>See claims 1-10. | 1-8 |

✓ Further documents are listed in the continuation of Box C.　　✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 December 2021** | **20 December 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/011847**

**C.    DOCUMENTS CONSIDERED TO BE RELEVANT**

| Category* | Citation of document, with indication, where appropriate, of the relevant passages | Relevant to claim No. |
|---|---|---|
| PX | KR 10-2248294 B1 (HASHSCRAPER INC.) 04 May 2021 (2021-05-04)<br>See claims 1-8.<br>*This document is a published earlier application that serves as a basis for claiming priority of the present international application. | 1-8 |

# EP 4 089 550 A1

**INTERNATIONAL SEARCH REPORT**
Information on patent family members

International application No.

**PCT/KR2021/011847**

| Patent document cited in search report | | | Publication date (day/month/year) | Patent family member(s) | | | Publication date (day/month/year) |
|---|---|---|---|---|---|---|---|
| CN | 104965849 | A | 07 October 2015 | CN | 104965849 | B | 07 December 2018 |
| KR | 10-2008-0031928 | A | 11 April 2008 | CA | 2617831 | A1 | 15 February 2007 |
| | | | | CA | 2617831 | C | 30 August 2016 |
| | | | | CN | 101283353 | A | 08 October 2008 |
| | | | | CN | 101283353 | B | 25 November 2015 |
| | | | | EP | 1924903 | A2 | 28 May 2008 |
| | | | | JP | 2009-503751 | A | 29 January 2009 |
| | | | | JP | 5431727 | B2 | 05 March 2014 |
| | | | | TW | 200715152 | A | 16 April 2007 |
| | | | | TW | I391834 | B | 01 April 2013 |
| | | | | US | 10963522 | B2 | 30 March 2021 |
| | | | | US | 2007-0185858 | A1 | 09 August 2007 |
| | | | | US | 2017-0357723 | A1 | 14 December 2017 |
| | | | | US | 2020-0311155 | A1 | 01 October 2020 |
| | | | | US | 9715542 | B2 | 25 July 2017 |
| | | | | WO | 2007-019311 | A2 | 15 February 2007 |
| | | | | WO | 2007-019311 | A3 | 30 August 2007 |
| US | 2010-0107055 | A1 | 29 April 2010 | US | 7669119 | B1 | 23 February 2010 |
| | | | | US | 7954053 | B2 | 31 May 2011 |
| KR | 10-2013-0059866 | A | 07 June 2013 | None | | | |
| KR | 10-2014-0100869 | A | 18 August 2014 | AU | 2014-215888 | A1 | 14 August 2014 |
| | | | | AU | 2014-215888 | B2 | 30 June 2016 |
| | | | | CN | 104317558 | A | 28 January 2015 |
| | | | | CN | 104317558 | B | 03 January 2020 |
| | | | | EP | 2765513 | A2 | 13 August 2014 |
| | | | | EP | 2765513 | A3 | 10 January 2018 |
| | | | | JP | 2014-154163 | A | 25 August 2014 |
| | | | | RU | 2015137874 | A | 13 March 2017 |
| | | | | RU | 2644133 | C2 | 07 February 2018 |
| | | | | US | 10462021 | B2 | 29 October 2019 |
| | | | | US | 2014-0222986 | A1 | 07 August 2014 |
| | | | | WO | 2014-123337 | A1 | 14 August 2014 |
| KR | 10-2248294 | B1 | 04 May 2021 | None | | | |

Form PCT/ISA/210 (patent family annex) (July 2019)